# EUROPÄISCHE PATENTSCHRIFT

(11) **EP 1 212 551 B1**
(45) Veröffentlichungstag und Bekanntmachung des Hinweises auf die Patenterteilung: **05.03.2003**
(21) Anmeldenummer: 00955954.3
(22) Anmeldetag: 23.08.2000
(51) Int. Cl.: F16H 55/17

(54) **ZAHNRIEMEN- ODER KETTENRAD**
TOOTHED-BELT WHEEL OR SPROCKET WHEEL
ROUE A CHAINE OU A COURROIE DENTEE

(30) Priorität: 16.09.1999 AT 63599 U
(43) Veröffentlichungstag der Anmeldung: 12.06.2002
(73) Patentinhaber: Miba Sintermetall Aktiengesellschaft, 4663 Laakirchen (AT)
(72) Erfinder: BLAIMSCHEIN, Franz, A-4642 Sattledt 186 (AT)
(74) Vertreter: Hübscher, Helmut, Dipl.-Ing.
(86) Internationale Anmeldenummer: AT0000225
(87) Internationale Veröffentlichungsnummer: WO01020194

(56) Entgegenhaltungen:
- GB-A- 2 136 582
- US-A- 4 718 396
- US-A- 4 929 220
- PATENT ABSTRACTS OF JAPAN vol. 1998, no. 05, 30. April 1998 (1998-04-30) -& JP 10 002908 A (SHIN KOBE ELECTRIC MACH CO LTD), 6. Januar 1998 (1998-01-06)
- PATENT ABSTRACTS OF JAPAN vol. 1996, no. 09, 30. September 1996 (1996-09-30) -& JP 08 135478 A (MITSUBISHI ELECTRIC CORP), 28. Mai 1996 (1996-05-28)
- PATENT ABSTRACTS OF JAPAN vol. 1998, no. 13, 30. November 1998 (1998-11-30) -& JP 10 220263 A (HONDA MOTOR CO LTD), 18. August 1998 (1998-08-18)

## Beschreibung

### Technisches Gebiet

Die Erfindung bezieht sich auf ein Zahnriemen- oder Kettenrad mit einem aus einem Radkranz und einer Nabe bestehenden Radkörper, der einen Geberring mit radial vorstehenden Ansätzen zur Erfassung verschiedener Drehwinkel bzw. Drehwinkelbereiche trägt, wobei der mit einnärts vorstehenden Ansätzen versehene Geberring in den Radkrang einsetzbar ist.

### Stand der Technik

Um von einem Drehwinkel bzw. einem Drehwinkelbereich eines Zahnriemen- oder Kettenrades abhängige Steuerungen vomehmen zu können, wird der Radkörper des Zahnriemen- oder Kettenrades mit einem Geberring verbunden, der radial vorstehende Ansätze zur berührungslosen, beispielsweise elektromagnetischen Erfassung der durch diese Ansätze bestimmten Drehwinkel bzw. Drehwinkelbereiche aufweist. Der Geberring wird dabei auf die Nabe des Zahnriemen- oder Kettenrades aufgesteckt und mit der Nabe verstemmt, so daß die Ansätze radial nach außen in den Abtastbereich eines entsprechenden Sensors ragen. Da die Meßgenauigkeit von Drehwinkelgebem mit solchen Geberringen, die als Stanzteile ausgeführt werden, unter anderem von der Planheit des Geberringes abhängt, ist eine ausreichende Steifigkeit und damit eine entsprechende Dicke des Geberringes zu fordern, um im Bereich der radial abstehenden Ansätze, die aus Gründen der Meßgenauigkeit einen entsprechenden Abstand von der Drehachse des Radkörpers aufweisen sollen, keine Verwindungen und damit keine Meßfehler infolge von Planlaufabweichungen in Kauf nehmen zu müssen. In diesem Zusammenhang ist außerdem zu bedenken, daß wegen der Forderung nach einem möglichst geringen Gewicht die sich über einen größeren Umfangswinkel erstreckenden Ansätze von radialen Armen des Geberringes getragen werden, was die Neigung zu Verwindungen im Bereich der Ansätze unterstützt. Aus der JP10 002 908 A ist ein Zahnriemenrod gemäß dem Oberbegriff des Anspruchs 1 bekannt.

### Darstellung der Erfindung

Der Erfindung liegt somit die Aufgabe zugrunde, ein Zahnriemen- oder Kettenrad der eingangs geschilderten Art so auszugestalten, daß einerseits enge Planlauftoleranzen gewährleistet werden können und anderseits eine Gewichtseinsparung möglich wird.

Die Erfindung löst die gestellte Aufgabe dadurch, daß der Geberring an über den Innenumfang des Radkranzes verteilten, eine axiale Abstützung für den Geberring bildenden Auflagen befestigbar ist.

Da die mit dem Sensor zusammenwirkenden Ansätze des Geberringes wegen der angestrebten Meßgenauigkeit einen entsprechenden radialen Abstand von der Drehachse des Radkörpers aufweisen sollen, können bei einem nicht der Nabe, sondern dem Radkranz zugeordneten Geberring die in diesem Fall einwärts vorstehenden Ansätze mit einem vergleichsweise geringen radialen Überstand angeordnet werden, was im Zusammenhang mit einer Ringbefestigung nicht über den Umfang, sondern über die Stimseite des Geberringes die Anforderungen an die für die Planlauftoleranz erforderliche Verwindungssteifigkeit erheblich herabsetzt, so daß die Dicke des Geberringes entsprechend verringert, beispielsweise halbiert werden kann. Damit kann nicht nur die angestrebte Gewichtsverminderung gewährleistet, sondern auch die durch den Geberring bedingte Unwucht verringert werden. Die stirnseitige, axiale Abstützung des Geberringes erfolgt in einfacher Weise auf entsprechenden Auflagen des Radkörpers, so daß der Geberring lediglich in den Radkranz bis zur Anlage auf den Auflagen axial eingesetzt und anschließend mit den Auflagen verbunden werden muß.

Da übliche Zahnriemen- oder Kettenräder zwischen der Nabe und dem Radkranz Radspeichen aufweisen, ergeben sich besonders einfache Konstruktionsverhältnisse für solche Zahnriemen- oder Kettenräder, wenn die Auflagen im Ansatzbereich der Radspeichen am Radkranz vorgesehen sind. In diesem Fall können die Auflagen durch einen Bearbeitungsansatz an den Radspeichen gebildet werden, was das Gewicht des Radkörpers kaum erhöht. Die Stützkräfte werden ja von den Radspeichen aufgenommen.

Der Geberring kann auf den Auflagen festgeklebt werden. Besonders günstige Befestigungsbedingungen ergeben sich allerdings, wenn der Geberring an den Auflagen durch eine Punktschweißung befestigbar ist. In diesem Fall bilden die Auflagen entsprechende Schweißbuckel.

### Kurze Beschreibung der Zeichnungen

In der Zeichnung ist der Erfindungsgegenstand beispielsweise dargestellt. Es zeigen
Fig. 1 ein erfindungsgemäßes Zahnriemenrad in einer stimseitigen Ansicht und
Fig. 2 dieses Zahnriemenrad in einem Schnitt nach der Linie ll-ll der Fig. 1.

### Bester Weg zur Ausführung der Erfindung

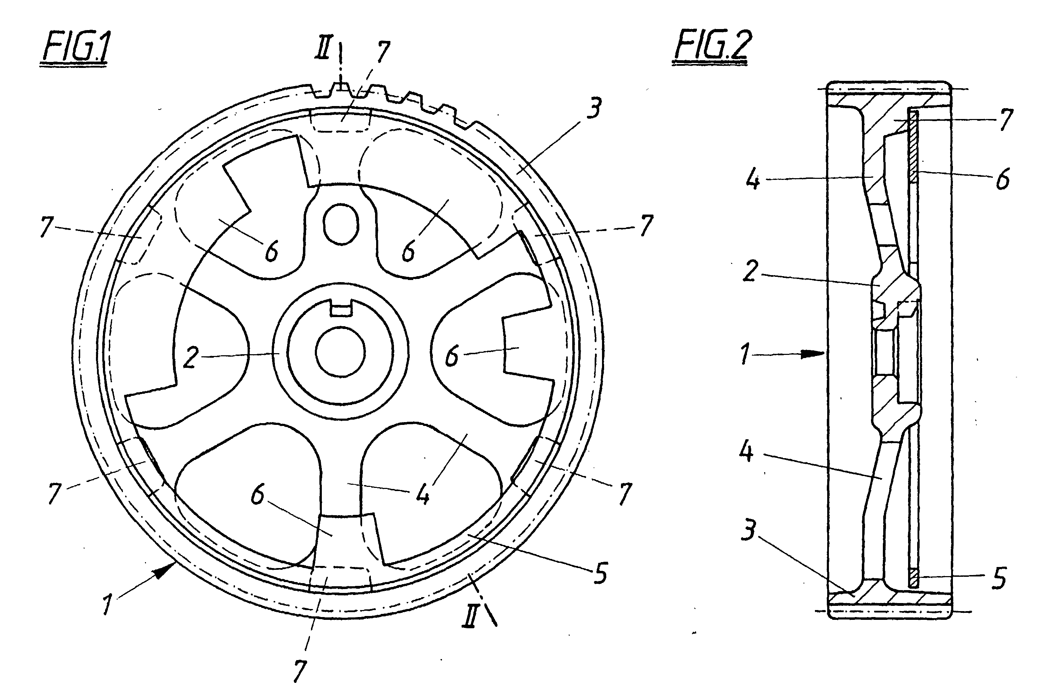

Wie das Ausführungsbeispiel nach den Fig. 1 und 2 zeigt, besteht der Radkörper 1 aus einer Nabe 2 und einem Radkranz 3, der mit der Nabe 2 über Radspeichen 4 verbunden ist.

Um verschiedene Drehwinkel bzw. Drehwinkelbereiche des Radkörpers 1 mit Hilfe eines Sensors berührungslos erfassen zu können, wird in den Radkranz 3 ein Geberring 5 mit radial einwärts vorstehenden Ansätzen 6 eingesetzt, die mit ihren radialen Begrenzungen bestimmte Drehwinkel und mit ihrer Umfangserstreckung bestimmte Drehwinkelbereiche festlegen, die von einem zugehörigen, gegenüber dem drehenden Radkörper 1 stillstehenden Sensor erfaßt werden können. Der Geberring 5 stützt sich mit seiner einen Stirnseite axial auf Auflagen 7, beispielsweise Schweißbuckein, ab, an denen der Geberring 5 punktförmig angeschweißt werden kann. Es ist aber auch jede andere geeignete Befestigungsart zur Verbindung des Geberringes 5 mit den Auflagen 7 möglich. Die Auflagen 7 befinden sich im Ansatzbereich der Radspeichen 4 am Radkranz 3 und bilden mit ihrem Bearbeitungsansatz eine achsnormale Auflagefläche für den Geberring 5. Da zufolge der Abstützung des Geberringes 5 auf den Auflagen 7 eine Verwindung des Geberringes 5 weitgehend verhindert werden kann, zumal die Ansätze 6 nur in einem vergleichsweise geringen Maß radial über den eigentlichen Ringkörper vorstehen und sich gegen diesen Ringkörper sektorförmig erweitern. Dies bedeutet, daß der Geberring 5 im Vergleich zu auf der Nabe 2 befestigten Geberringen mit radial nach außen abstehenden Ansätzen, die in ihrer Lage und Anordnung den Ansätzen 6 eines erfindungsgemäßen Geberringes 5 entsprechen, eine deutlich geringere Verwindungssteifigkeit für die Einhaltung der geforderten Planlauftoleranzen aufzuweisen braucht, was sich unmittelbar in der Dicke und hinsichtlich des Ringgewichtes auswirkt. Außerdem wird die durch solche Geberringe 5 bedingte Unwucht im Vergleich zu herkömmlichen Geberringen herabgesetzt. Da auch der Herstellungsaufwand verringert werden kann, ergeben sich insgesamt besonders günstige konstruktionsverhältnisse, ohne Änderungen hinsichtlich des Sensors vornehmen zu müssen.

## Patentansprüche

1. Zahnriemen- oder Kettenrad mit einem aus einem Radkranz (3) und einer Nabe (2) bestehenden Radkörper (1), der einen Gebe rring (5) mit radial vorstehenden Ansätzen (6) zur Erfassung verschiedener Drehwinkel bzw. Drehwinkelbereiche trägt, wobei der mit den einwärts vorstehenden Ansätzen (6) versehene Geberring (5) in den Radkranz (3) einsetzbar ist **dadurch gekennzeichnet, daß** der Geberring (5), an über den Innenumfang des Radkranzes (3) verteilten, eine axiale Abstützung für den Geberring (5) bildenden Auflagen (7) befestigbar ist.

2. Zahnriemen- oder Kettenrad nach Anspruch 1, **dadurch gekennzeichnet, daß** die Auflagen (7) im Ansatzbereich von Radspeichen (4) am Radkranz (3) vorgesehen sind.

3. Zahnriemen- oder Kettenrad nach Anspruch 1 oder 2, **dadurch gekennzeichnet, daß** der Geberring (5) an den Auflagen (7) durch eine Punktschweißung befestigbar ist.

## Claims

1. A toothed belt wheel or chain wheel with a wheel body (1) consisting of a wheel rim (3) and a hub (2) and carrying a transmitter ring (5) with radially projecting attachments (6) for detecting different angles of rotation or ranges of angles of rotation, the transmitter ring (5) provided with the inwardly projecting attachments (6) being insertable into the wheel rim (3), **characterised in that** the transmitter ring is fixable on supports (7) which are distributed over the inner periphery of the wheel rim (3) and which form an axial support for the transmitter ring (5).

2. A toothed belt wheel or chain wheel according to claim 1, **characterised in that** the supports (7) are disposed in the region of the attachment of spokes (4) to the wheel rim (3).

3. A toothed belt wheel or chain wheel according to claim 1 or 2, **characterised in that** the transmitter ring (5) is fixable on the supports (7) by spot welding.

## Revendications

1. Roue pour courroie dentée ou roue à chaîne, comportant un corps de roue (1) formé d'une couronne de roue (3) et d'un moyeu (2), corps de roue portant un anneau formant capteur (5), muni d'appendices (6) en saillie radialement pour la détection de différents angles de rotation ou plages d'angles de rotation, l'anneau formant capteur (5), muni d'appendices (6) en saillie vers l'intérieur, étant susceptible d'être inséré dans la couronne de roue (3), **caractérisé par le fait que** l'anneau formant capteur (5) est susceptible d'être fixé sur des reposoirs (7) répartis sur la périphérie intérieure de la couronne de roue (3), formant un appui axial pour l'anneau formant capteur (5).

2. Roue pour courroie dentée ou roue à chaîne selon la revendication 1, **caractérisé par le fait que** les reposoirs (7) sont prévus dans la zone d'appendice de rayons de roue (4) sur la couronne de roue (3).

3. Roue pour courroie dentée ou roue à chaîne selon la revendication 1 ou 2, **caractérisé par le fait que** l'anneau formant capteur (5) est susceptible d'être fixé sur les reposoirs (7) par soudage par points.
